# EUROPEAN PATENT APPLICATION

(11) **EP 1 503 548 A1**
(43) Date of publication of application: **02.02.2005**
(21) Application number: 03017485.8
(22) Date of filing: 01.08.2003
(51) Int. Cl.: H04L 12/56, G06F 13/38, H04L 29/06, H04M 11/06

(54) **Distributed Quality of Service Management System**

(71) Applicant: fg microtec GmbH, 81677 München (DE)
(72) Inventor: Hofmann, Matthias, 87719 Mindelheim (DE); Kelz, Thomas, Dr., 16767 Germendorf (DE); Mirbaha Vahid, Robert, 85386 Eching (DE)
(74) Representative: Köllner, Malte

(57) **Abstract**

An application unit and a modem unit for mobile communication are provided. The application unit comprises at least one application that exchanges data traffic with at least one protocol stack, wherein said at least one protocol stack transfers data between at least one of the applications and at least one physical interface. The modem unit comprises a broadcast facility for setting up a wireless connection, and at least one transmission protocol stack for transferring data traffic between the at least one physical interface and the broadcast facility. The at least one physical interface is adapted for transmitting data traffic as well as flow control information between the modem unit and at least one application unit.

## Description

### BACKGROUND OF THE INVENTION

The present invention relates to an application unit, to a modem unit, to a user equipment for mobile communication, and to an interface facility. Furthermore, the present invention relates to a method for coordinating data flow.

Mobile devices might comprise applications, protocol stacks as well as a modem unit adapted for establishing a wireless connection with a mobile communication network, whereby all said entities may run on one processing system. The modem unit might as well be installed on a different processing resource than the applications. Besides that, for the modem unit, a first operating system might be used, and for the applications, another operating system might be employed. It is expected that in the future, more and more user terminals will be available that do not comprise a proprietary modem unit. Instead, said user terminals will comprise a physical interface for establishing a connection between said user terminal and an external modem unit, whereby the external modem unit will be responsible for setting up a wireless connection with the mobile communication network. Besides that, phones will be available where an additional processing resource and/or an additional operating system like e.g. Symbian is provided for running the applications.

In the European Patent Application "Quality-of-Service Management System", Application No. 03012613.0, which has been filed by the applicant of the present invention, a QoS management system comprising a plurality of different entities is described. The disclosure of said application is herewith incorporated into this specification by reference.

### SUMMARY OF THE INVENTION

It is an object of the invention to improve flow control in a distributed user equipment comprising a modem unit and at least one application unit. The object of the invention is solved by the independent claims. Preferred embodiments are shown by the dependent claims.

An application unit according to embodiments of the present invention comprises at least one application, wherein said at least one application is adapted for exchanging data traffic for wireless communication with at least one protocol stack.

Said at least one protocol stack is adapted for transferring data traffic between at least one of said applications and at least one physical interface. The at least one physical interface is adapted for transmitting data traffic as well as flow control information between said application unit and a modem unit.

The application unit is connected with the modem unit via at least one physical interface, whereby both uplink traffic and downlink traffic related to the applications is transmitted via said at least one physical interface. According to the invention, flow control information may be transmitted via the at least one physical interface. The data traffic and the flow control information might e.g. be transmitted in a multiplexed mode via said at least one physical interface. Alternatively, the flow control information might e.g. be transmitted via different physical interfaces than the data traffic.

In prior art solutions, the application unit has not been aware of the flow parameters on the modem unit, and the modem unit has not been aware of the applications and the flow parameters on the application unit. The embodiments of the present invention allow for an exchange of flow control information between the application unit and the modem unit. On both of the units, said flow control information is helpful for utilizing the available resources and the available bandwidth of the wireless connection as efficiently as possible. Each of the units is informed about the overall system state and may react accordingly. As a result, the system's overall performance is increased. A smooth adaptation of the system's control settings is achieved, and the applications' QoS requirements can be fulfilled to a degree that has not been possible yet.

According to a preferred embodiment of the invention, said at least one physical interface is realized as or comprises at least one serial interface, in particular at least one of a RS232, IrDA, Bluetooth, USB, PCMCIA, UART interface. A serial interface provides sufficient bandwidth for transmitting both application-related data traffic and flow control information between the modem unit and the application unit.

According to a preferred embodiment of the invention, said flow control information comprises at least one of: QoS profiles of said applications, actual parameters indicating the actual state of the data flow on at least one of the application unit and the modem unit, and predicted parameters indicating a future state of the data flow on at least one of the application unit and the modem unit. On the application unit, the applications and their QoS requirements may be known. By transmitting these QoS profiles to the modem unit and adjusting the modem unit's parameters accordingly, the distributed system's overall data flow can be optimised, and the applications' QoS requirements can be fulfilled as far as possible. Furthermore, actual parameters indicating the system's actual flow situation might be collected on at least one of the application unit and the modem unit. In order to optimise the overall data flow in a distributed system, each of the units has to be aware about the data flow on the remote units, because this allows to adjust the parameters of the own unit in accordance with the system's overall data flow. Flow parameters and QoS parameters collected on the modem unit might e.g. be provided, as a part of the flow control information, to the application unit. The settings on the application unit may then be adapted accordingly. Vice versa, the application unit might inform the modem unit about types of data traffic, about buffer fill levels and other flow parameters. The exchange of flow parameters helps to find suitable control settings for improving the overall data flow. Both the modem unit and the application unit get a complete picture, and therefore, the decision-making is improved. By means of prediction methods, parameters indicating a future system state might be derived from the actual flow parameters. Said predictions might e.g. anticipate the occurrence of congestion, of cell reselections, of sudden changes of the available bandwidth, etc. By predicting the system behaviour in the near future, a smooth control of the system's settings is accomplished. In order to inform the application unit about predictions that have been calculated on the modem unit, said predictions are transmitted, as a part of the flow control information, to the application unit. Vice versa, the application unit might provide its predictions to the modem unit.

According to another preferred embodiment of the invention, said flow control information comprises control settings adapted for controlling the data flow on at least one of the application unit and the modem unit. For example, control settings for the entire system may be generated on the part of the modem unit. Said control settings comprise control settings for entities on the application unit that have to be transmitted, as a part of the flow control information, from the modem unit to the application unit. Whenever control settings for an entity on a remote unit are generated, said control settings have to be transmitted, as a part of the flow control information, via the at least one physical interface.

In a preferred embodiment of the invention, said application unit is adapted for receiving, from said modem unit, at least one of control settings for said applications, control settings for said protocol stacks, control settings for buffers. Said control settings are transmitted as a part of said flow control information.

According to another preferred embodiment of the invention, said application unit is adapted for transmitting to said modem unit at least one of: information about said applications, QoS profiles of said applications, information about the protocols used by said applications, types of data traffic, bandwidth per traffic type, maximum buffer sizes, buffer fill levels. Said information is transmitted as a part of said flow control information.

According to another preferred embodiment, said application unit is adapted for transmitting to said modem unit at least one of: predictions related to cell reselections, predictions related to throughput, predictions related to bit error rate, predictions related to coding scheme, predictions related to one way delay, predictions related to round trip time, wherein said predictions are transmitted as a part of said flow control information. Predictions that have been calculated on the application unit might be provided to the modem unit, because, as an example, settings of the transmission protocol stack might have to be adjusted accordingly. Because of the low transmission delay, the predictions will still be valuable when they arrive at the modem unit. In case the modem unit's processing system is employed for performing calculations, e.g. in order to predict cell reselections, the application units connected to said modem unit might be notified. In both cases, the predictions are transmitted as a part of the flow control information via the at least one physical interface.

According to a preferred embodiment, a set of virtual interfaces is used for setting up, maintaining and terminating one or more data connections via said at least one physical interface. Via the at least one physical interface, a lot of different data streams have to be transmitted, whereby said data streams might have completely different properties, and whereby different priorities might be assigned to said data streams. Some of the data streams might arise from different kinds of applications, others might contain flow control information, etc. Said data streams are provided to different virtual interfaces. This allows to distinguish between said data streams, and to process each of the data streams in accordance with its priority and its specific needs.

According to a preferred embodiment of the invention, a permanent high-priority connection is set up between said application unit and said modem unit, with said flow control information being transmitted via said high-priority connection. When measured data, QoS parameters, predictions and control settings are transmitted between the modem unit and the application unit, the transmission delay must not be too high. Otherwise, the flow control information will already be outdated when it is received. For this reason, a high priority has to be assigned to the flow control channel.

According to a preferred embodiment, said at least one physical interface is adapted for transmitting said data traffic and said flow control information in a multiplexed mode between said application unit and said modem unit. The transmission bandwidth provided by the at least one physical interface has to be shared between various different data streams. By transmitting data of different data streams in a multiplexed mode, a plurality of different data streams may be transmitted at the same time, whereby said data streams will not interfere with each other.

In another preferred embodiment, said application unit comprises at least two physical interfaces, whereby said flow control information is transmitted via different physical interfaces than said data traffic.

According to a preferred embodiment of the invention, the application unit comprises a first communication handler module adapted for coordinating and prioritising data traffic between functional entities of the application unit and the modem unit. The first communication handler may e.g. provide a variety of services that relate to allocating, administrating and terminating connections via the at least one physical interface. It may assign priorities to the data streams that are to be transmitted via the at least one physical interface, in order to make sure that the most important data streams are transmitted even if the available bandwidth is not sufficient to carry all traffic.

According to another preferred embodiment of the invention, the application unit comprises a first controller module adapted for receiving at least one of flow control information collected on the application unit and flow control information received via said at least one physical interface, and for deriving, from said inputs, control settings in a way that the overall data flow is optimised. Said first controller module might e.g. be provided with flow control information from the application unit, from the modem unit, or from both units. The first controller module might e.g. be aware of the applications' QoS profiles, of the actual state of the data flow within the user equipment, and of predictions that have been made. The first controller module is responsible for decision-making, i.e. it has to derive control settings from the known information. The task is to adjust arbitrary parameters on the application unit, on the modem unit, or on both units in a way that the overall data flow on the distributed system is optimised. It is attempted to use the available resources in a way that the requirements of the various types of data traffic can be fulfilled as far as possible.

In a preferred embodiment of the invention, said first controller module may act as a primary controller that controls a second controller module on the modem unit. In case there exists a first controller module on the application unit and a second controller on the modem unit, it might be advantageous to select one of the two controller modules as a primary controller that is responsible for generating the control settings for the entire system, or at least for parts of the entire system. If one central instance is responsible for deciding about the control settings, a coherent and well-coordinated set of control settings will be generated. It might be advantageous to select the application unit's first controller module as a primary controller, because there might be much more memory and computation power available on the application unit than on the modem unit.

According to another preferred embodiment of the invention, said first controller module may act as a secondary controller that is controlled by a second controller module on the modem unit. The second controller module on the modem unit might as well be selected as a primary controller. In this case, the first controller module on the application unit might act as the second controller module's slave. Especially if two or more application units are connected with one modem unit, it is advantageous to establish the second controller module on the modem unit as the primary controller.

According to a preferred embodiment of the invention, the application unit comprises at least one protocol optimiser module adapted for accessing the settings of corresponding protocol stacks, preferably in accordance with control settings.

According to a preferred embodiment of the invention, the application unit comprises a first QoS packet processor module adapted for at least one of monitoring and modifying the data traffic between at least one of the protocol stacks and said at least one physical interface. Before data traffic of any one of the applications installed on the application unit may be forwarded, via the at least one physical interface, to the modem unit, said data traffic has to pass the first QoS packet processor. This provides an opportunity for monitoring the data traffic, and unknown types of data traffic may be detected and considered by the QoS management system. Furthermore, the first QoS packet processor module may actively modify certain data streams by holding back or even discarding data packets. The first QoS packet processor module might receive control settings from a respective primary controller, no matter whether said primary controller is located on the application unit or on the modem unit.

According to a preferred embodiment of the invention, the protocol stacks comprise at least one of WAP, TCP, WTCP, UDP, UDP Lite, RTP/RTCP protocol stacks.

A modem unit for mobile communication according to embodiments of the present invention comprises a broadcast facility adapted for setting up a wireless connection for mobile communication. The modem unit further comprises at least one transmission protocol stack adapted for transferring data traffic between said broadcast facility and at least one physical interface. Said at least one physical interface is adapted for transmitting data traffic as well as flow control information between the modem unit and at least one application unit. The modem unit according to embodiments of this invention allows for an exchange of flow control information between the at least one application unit and the modem unit. In particular, the modem unit might e.g. be informed about the data flow on the application unit, and it might e.g. inform said at least one application unit about its actual status. By exchanging flow control information, the system's overall control is improved. A smooth adaptation of the system's control settings is achieved, and the applications' QoS requirements may be fulfilled to a degree that has not been possible yet.

In a preferred embodiment of the invention, said modem unit is adapted for transmitting to at least one of the application units at least one of: parameters of the air link, signal strength of the wireless connection, parameters of the transmission protocol stack, available bandwidth, maximum buffer sizes, buffer fill levels, information about PDP contexts, radio resource management information. Said information is transmitted as a part of said flow control information.

According to a preferred embodiment of the invention, said modem unit is adapted for receiving, from at least one of the application units, at least one of: information about said applications, QoS profiles of said applications, information about the protocols used by said applications, types of data traffic, bandwidth per traffic type, maximum buffer sizes, buffer fill levels. Said information is transmitted as a part of said flow control information. Thus, the control settings on the modem unit can e.g. be adjusted to the QoS requirements of the data streams that have to be transmitted.

According to a preferred embodiment of the invention, said modem unit is adapted for receiving, from at least one of the application units, at least one of: control settings for the transmission protocol stack, control settings for PDP contexts, control settings for buffers. Said control settings are transmitted as a part of said flow control information.

In a preferred embodiment of the invention, the applications' QoS profiles are taken into account by at least one of: setting PDP contexts, setting PDP subcontexts, setting or modifying GGSN filter rules. A PDP (Packet Data Protocol) context allows to define the transmission properties for a certain kind of data traffic. By means of a PDP context, it is possible to specify the transmission parameters of the transmission protocol stack as well as the transmission properties of the wireless link up to the mobile communication network's GGSN (Gateway GPRS Support Node).

According to a preferred embodiment of the invention, the modem unit comprises a second QoS packet processor module adapted for at least one of monitoring and modifying the data traffic between said at least one physical interface and the transmission protocol stack. In addition to data traffic generated by applications on the application unit, the second QoS packet processor module might also detect traffic that arises from applications on the modem unit, and it may identify bandwidths and QoS requirements of said data traffic. Control settings can then be chosen in a way that the respective requirements of the applications (including those on the modem unit) are fulfilled as far as possible.

According to a preferred embodiment of the invention, the modem unit comprises a command interpreter adapted for receiving and processing at least one of messages and commands issued by at least one of the application units, in particular for receiving and processing initialisation messages. The command interpreter monitors the data traffic that is transmitted to the modem unit via the at least one physical interface. If a certain command is detected within said data traffic, said command will be interpreted, and the corresponding actions will be carried out. The services provided by the command interpreter are especially useful in case an application on any one of the application units intends to transmit data via the air interface though the entities on the modem unit have not been initialised yet. In this case, the respective application unit sends initialisation messages via the at least one physical interface. On the modem unit, said initialisation messages are detected by the command interpreter. The command interpreter might induce an initialisation of the required entities, and then, the modem can start transmitting data via the wireless link. Thus, the command interpreter allows for a remote initialisation of entities on the modem unit.

In a preferred embodiment of the invention, said transmission protocol stack is a stack for at least one of: GPRS/GSM, GPRS/EDGE, CDMA, UMTS, wireless LAN, Bluetooth, HiperLan. The invention is in no way limited to any of said transmission protocols, though.

A user equipment might comprise at least one application unit and a modem unit as described above, whereby the units are connected via at least one physical interface. Data traffic as well as flow control information is transmitted, via said at least one physical interface, between at least one of the application units and said modem unit. By exchanging flow control information between the modem unit and the one or more application units, said units can be brought together more closely. Measured data and predictions are collected from various parts of the system, and the application units might e.g. inform the modem unit about the QoS profiles of the various applications. From these inputs, control settings for the entire system are derived, and said control settings are distributed to the various entities. As a result, the modem unit and the one or more application units merge and work together as one system.

According to a preferred embodiment of the invention, said modem unit and at least one of the application units are implemented as one embedded mobile device, preferably as a smartphone. Within the embedded device, the application unit and the modem unit might e.g. run on different processing systems. On the modem unit, a first operating system might be employed, while on the application unit, another operating system like e.g. Symbian might be used that is better suited for the respective applications.

According to another preferred embodiment, said modem unit is implemented as a separate device, preferably as a CF card, as a PCMCIA card, or as a part of a mobile phone. According to a preferred embodiment of the invention, at least one of the application units is implemented as a separate device, preferably as a laptop, as a mobile terminal, or as a PDA. A user terminal does not necessarily have to comprise a modem unit. Instead, it might comprise at least one physical interface for establishing a connection with an external modem unit.

The modules according to embodiments of the present invention can be partly or entirely embodied or supported by suitable software, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings.
- Fig. 1: shows an application unit that is part of a user equipment for mobile communication, together with a portion of a modem unit;
- Fig. 2: shows a modem unit that is part of a user equipment for mobile communication, together with a portion of the application unit of Fig. 1; and
- Fig. 3: depicts the protocol layers that can be used for transmitting data in a multiplexed mode via the physical interface.

### DETAILED DESCRIPTION OF EMBODIMENTS OF THE INVENTION

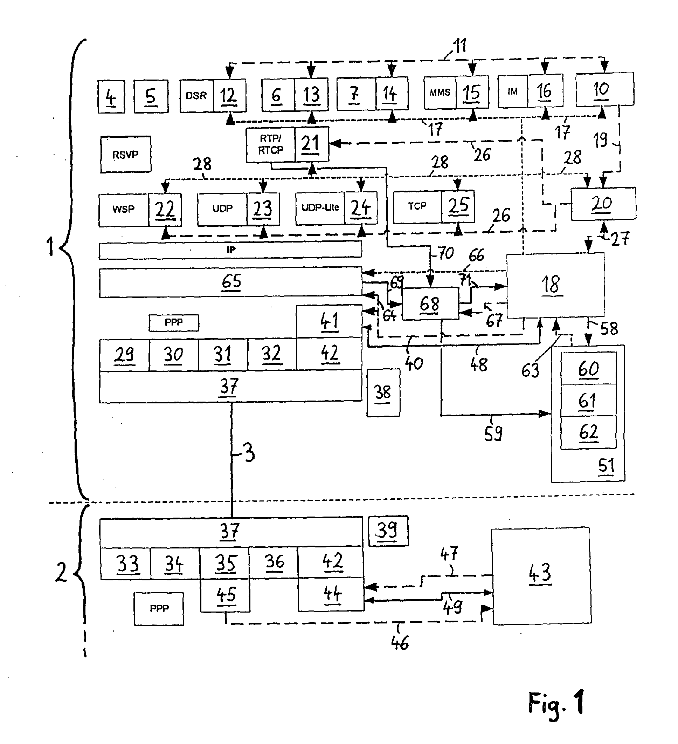

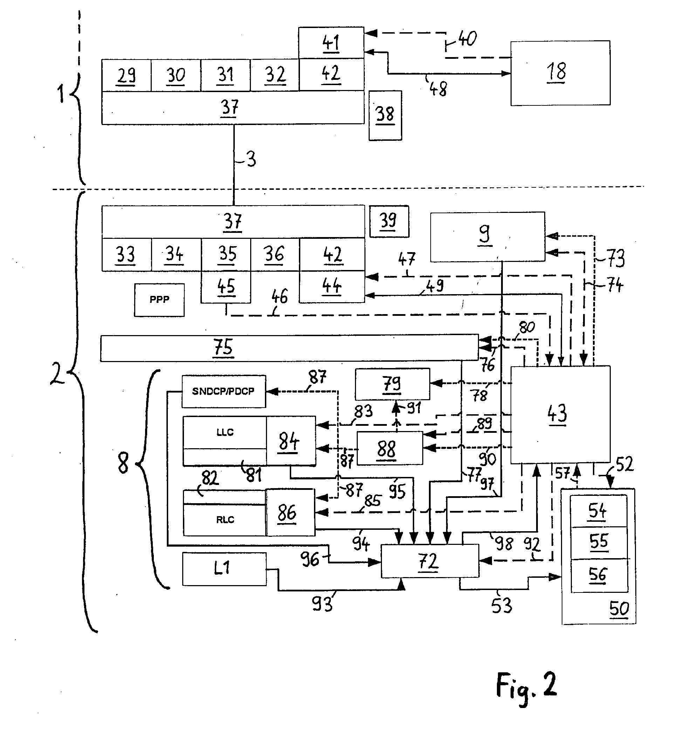

Fig. 1 and Fig. 2 depict a user equipment for mobile communication that comprises an application unit 1 and a modem unit 2. The application unit 1 and the modem unit 2 are connected via a physical interface 3. A plurality of user applications might run on the application unit 1. In the example shown in Fig. 1, the applications comprise e-mail 4, a web-browser 5, DSR (Digital Surveillance Recorder), Push2Talk 6, Video Conference 7, MMS (Multimedia Messaging Service), IM (Instant Messaging), etc. The application unit 1 might further comprise transport protocol stacks with protocol layers like e.g. RTP/RTCP (Real Time Transport Protocol, Real Time Transport Control Protocol), RSVP (Resource Reservation Protocol), WSP (Wireless Session Protocol), UDP (User Datagram Protocol), UDP-Lite, TCP (Transmission Control Protocol), WTCP (Wireless profiled TCP), WAP (Wireless Application Protocol), etc. The transport protocol stacks transform the data payload of the various applications into IP (Internet Protocol) packets. The application-related data, and in particular the IP packets, are exchanged, via the physical interface 3, with the modem unit 2. The physical interface 3 might e.g. be realized according to one of the standards RS232, USB (Universal Serial Bus), Bluetooth, IrDA (Infrared Data Association), PCMCIA, etc. or by means of UARTs (Universal Asynchronous Receiver - Transmitter).

The modem unit 2 is implemented as a separate unit. The modem unit 2 is responsible for establishing and maintaining a wireless connection to a mobile communication network. For this purpose, the modem unit 2 comprises at least one transmission protocol stack 8. Said transmission protocol stack 8 might e.g. be a GPRS/GSM stack, or a GPRS/EDGE stack, or a stack for a future transmission protocol such as UMTS. IP packets that are received from the application unit 1 via the physical interface 3 are transferred to the transmission protocol stack 8. Vice versa, data received via the wireless connection is provided to the transmission protocol stack 8 and is routed, via the physical interface 3, to the application unit 1. The modem unit 2 might further comprise internal applications 9 and corresponding protocol stacks adapted for exchanging data traffic with the transmission protocol stack 8.

In the set-up shown in Fig. 1 and Fig. 2, the application unit 1 and the modem unit 2 are realized as separate units. For example, the application unit 1 might run on a first CPU (or on a first DSP), whereby a first operating system is used, while the modem unit 2 might run on a second CPU (or on a second DSP), where-whereby a second operating system is used. Such a set-up might e.g. be found on a so-called smartphone, whereby a dedicated operating system like e.g. Symbian might be installed on the smartphone's application unit. To the end-user, these devices look the same as mobile phone devices, though the application unit and the modem unit are implemented as separate units. The application unit 1 and the modem unit 2 might as well be implemented on different mobile terminals. For example, a mobile device like a phone might be used as a modem for a second device like e.g. a laptop or a PDA (Personal Digital Assistant), whereby applications like e-mail, web-browser, VoIP client, Video applications etc. are executed on the part of the second device. The mobile phone comprises the modem unit, and the second device acts as an application unit. Alternatively, the modem unit 1 might be a dedicated piece of hardware like a CF (Compact Flash) card, a PCMCIA card, or the like.

In the following, the structure and functionality of a QoS management system for the above mentioned kind of user equipment will be described. It has to be noted that the invention can also be used if two or more application units are connected to one modem unit. Furthermore, the at least one application unit might be connected with two or more different modem units that support different transmission standards.

The applications that are running on the part of the application unit 1 are provided by different third party companies. Some of said applications, for example e-mail 4 and web-browser 5, might not be aware of the QoS management system. Other applications, like DSR, Push2Talk 6, Video Conference 7, MMS and IM, might be aware of the QoS management system. For these applications, the external application manager 10 is visible. The applications that are aware of the QoS management system register (11) with the external application manager 10 and forward their respective QoS requirements to the external application manager 10. The applications' QoS requirements are usually specified in terms of QoS classes. In general, four basic QoS classes are used that have been defined by 3GPP (3^{rd} Generation Partnership Project), though other classifications might be used as well.

### Conversational class

Traffic of the conversational class is very delay sensitive, and transfer delay and time variance between packets must stay below a certain value so that the human perception will accept the quality of the link. For traffic of the conversational class, it is most important that data is delivered in time. The bit error rate (BER) of the data traffic is not that critical. Examples for traffic of the conversational class comprise IP telephony and video telephony. In the example of Fig. 1, data traffic of the application Video Conference 7 belongs to the conversational class.

### Streaming class

Traffic of the streaming class comprises one way real-time traffic. For traffic of the streaming class, a low transfer delay is not necessarily required, but the delay variation of the real-time data stream should be limited. In Fig. 1, data traffic of the application Push2talk 6 belongs to the streaming class.

### Interactive class

Traffic of this class might e.g. emerge from an application where a user exchanges data interactively with an opposite party, which might either be another user or a computer system. The response to a request is generally expected within a certain time limit. Although the transfer delay may be higher than in case of traffic of the conversational class, the round trip time (RTT) is a key parameter. Traffic of the interactive class should show a low BER. Examples for this kind of traffic comprise web browsing or Telnet. In the example of Fig. 1, data traffic of the application IM belongs to the interactive class.

### Background class

For data traffic of the background class, low delay or a short delivery time is not an issue, but the bit error rate (BER) has to be low. Data traffic of this class is usually received by a computer. Email traffic is a typical example for this kind of traffic. Accordingly, data traffic of the application e-mail 4 in Fig. 1 belongs to the background class.

For at least some of the applications that are aware of the QoS management system, so-called application optimisers might be installed. In Fig. 1, the applications DSR, Push2Talk 6, Video Conference 7, MMS and IM comprise corresponding application optimisers 12-16. When an application intends to send data, the corresponding application optimiser might adjust the way said data is generated to the overall data flow, to the available bandwidth, to the properties of the wireless connection, etc. In particular, the application optimisers 12-16 might influence the timing, the packaging of data, and the number of application frames per data packet, whereby the applications' QoS profiles are taken into account. During initialisation, the application optimisers 12-16 register with the external application manager 10. During operation, the application optimisers 12-16 might receive control information 17 from the external main controller 18, with said control information 17 comprising control settings for the application optimisers 12-16.

Next, the external application manager 10 initialises (19) the external protocol manager 20. The external protocol manager 20 is informed about the applications that run on the application unit 1, about the transport protocols used by said applications, and about the respective QoS profiles of the applications' data traffic.

For at least some of the transport protocol stacks, so-called protocol optimisers might be installed. In Fig. 1, protocol optimisers 21-25 corresponding to the transport protocol stacks RTP/RTCP, WSP, UDP, UDP-Lite ahd TCP are shown. The external protocol manager 20 initialises (26) the protocol optimisers 21-25 in accordance with the applications' QoS profiles. Each of the protocol optimisers 21-25 is responsible for dynamically accessing and adjusting the properties of its corresponding transport protocol stack. Said adjustment is performed in accordance with the corresponding applications' QoS requirements, in accordance with the overall data flow, and in accordance with measured or predicted system parameters.

Next, the external protocol manager 20 initialises (27) the external main controller 18 and transfers the control of the protocol optimisers 21-25 to said external main controller 18. Further on, both the protocol optimisers 21-25 and the external protocol manager 20 will receive their respective control settings 28 from the external main controller 18.

During operation, changes of the system's set-up and of the data traffic generated by the applications might occur, and accordingly, a re-initialisation of at least one of the external application manager 10, the application optimisers 12-16, the external protocol manager 20 and the protocol optimisers 21-25 might be necessary. Said re-initialisations can either be induced by the applications themselves or by the external main controller 18.

The application unit 1 and the modem unit 2 communicate via the physical interface 3. In addition to uplink and downlink data traffic related to various applications, also flow control information is transmitted between the application unit 1 and the modem unit 2. Said flow control information might e.g. comprise measured parameters that indicate the actual system state, predictions indicating a future system state, and information related to the system's configuration. The flow control information might also comprise control settings for entities on the application unit 1 and on the modem unit 2.

The different data streams transmitted via the physical interface 3 should be handled separately and in accordance with their respective priorities. On the application unit 1 and on the modem unit 2, a plurality of virtual interfaces 29-32 and 33-36 are provided, and said virtual interfaces may be used for setting up one or more virtual channels between the application unit 1 and the modem unit 2. According to a first embodiment, a corresponding physical interface is assighed to each of the virtual interfaces in a way that a one-to-one correspondence is established between the virtual interfaces and the physical interfaces. Alternatively, if only one physical interface is available, or if less physical interfaces than virtual interfaces are available, the data streams may be transmitted in a multiplexed mode. In this embodiment, a multiplexing protocol 37 is implemented both on the application unit 1 and on the modem unit 2. The multiplexing protocol 37 is adapted for providing a plurality of separate virtual interfaces. The multiplexing protocol 37 allows to transmit a plurality of data streams via different virtual channels in parallel, whereby priorities assigned to said data streams are considered. Accordingly, the transmission of lower priority traffic may be interrupted by higher priority traffic. The multiplexing is controlled by a mux controller 38 on the application unit 1 and by a mux controller 39 on the modem unit 2. Said mux controllers 38, 39 are responsible for setting up and tearing down virtual channels between the virtual interfaces.

For transmitting data via the physical interface 3 in a multiplex mode, the PPP (Point-to-Point Protocol) suite might be used together with some extensions. Said extensions allow for virtual serial lines and traffic prioritisation. A detailed description of the PPP protocol suite can be found in the document IETF RFC 1661. Alternatively, the PPP protocol suite without the above mentioned extensions can be combined with one of the multiplexing protocols defined by ETSI (European Telecommunications Standards Institute). Technical specifications of said multiplexing protocols can be found in ETSI, 3GPP TS 07.010 and 27.010. According to a third alternative, the application unit 1 and the modem unit 2 might be linked by an IP connection.

In the following, the initialisation of the interface facility will be described. The external main controller 18 addresses the mux controller 38 and allocates a virtual interface for establishing a Fast QoSM Connection between the application unit 1 and the modem unit 2. Next, the external main controller 18 initialises (40) the Comm Handler 41 and the Fast QoSM Connection 42. The Comm Handler 41 is responsible for handling the communication between entities of the QoS management system located on the application unit 1 and entities located on the modem unit 2. In case of congestion, the Comm Handler 41 has to decide about the priorities of the various data streams.

The Fast QoSM Connection 42 is a fast communication channel adapted for transmitting flow control information between the application unit 1 and the modem unit 2. The Fast QoSM Connection 42 is permanently set up on one channel of the interface. Flow control information, in particular measured data, control settings and predictions, have to be transmitted with low delay. For this reason, one of the highest available priorities is assigned to the Fast QoSM Connection 42.

Next, the application unit's Comm Handler 41 issues commands for starting up a main controller 43 and a Comm Handler 44 on the part of the modem unit 2. Said commands are transmitted, via the Fast QoSM Connection 42, to the modem unit 2. There, said commands are detected and interpreted by an AT command interpreter 45. In accordance with said commands, the main controller 43 is initialised (46). Then, the main controller 43 initialises (47) the modem unit's Comm Handler 44. Between the application unit's Comm Handler 41 and the modem unit's Comm Handler 44, a link is established. As soon as this link is available, the Comm Handler 41 will inform the external main controller 18.

The external main controller 18 may now forward flow control information via the data link 48 to the Comm Handler 41. From the Comm Handler 41, the flow control information is transmitted, via the Fast QoSM Connection 42, to the Comm Handler 44. The Comm Handler 44 forwards the flow control information via the data link 49 to the main controller 43. In the opposite direction, the main controller 43 may transmit flow control information via the data link 49, the Fast QoSM Connection 42 and the data link 48 to the external main controller 18. The external main controller 18 and the main controller 43 may now exchange all kinds of flow control information comprising QoS profiles, measured parameters, statistics, predictions, control settings, etc.

At first, the main controller 43 is installed as a primary controller that controls the external main controller 18. The external main controller 18 acts as a secondary controller (slave). The external main controller 18 and the main controller 43 exchange information about their respective capabilities and about the configuration of the application unit 1 and the modem unit 2. Then, the main controller 43 has to decide whether it is favourable to transfer the primary control of the QoS management system to the external main controller 18 or not. The CPU of the application unit 1 might have much more resources in terms of processing power and memory, and the modem unit's CPU would be offloaded from some of its tasks. However, if two or more application units are connected to the modem unit, the main controller 43 will most likely continue to act as a primary controller and control the tasks of the external main controllers.

The primary main controller is responsible for setting up the whole QoS management system. It has to decide how to distribute the required functionalities to the entities of the distributed QoS management system. Then, the respective entities are initialised accordingly. For example, the primary main controller has to decide whether a state predictor should be initialised on the application unit 1, on the modem unit 2, or on both of said units. The state predictors might use complex algorithms for deriving the respective predictions, and accordingly, the state predictors will demand a lot of computation power. For this reason, it might be advantageous for the modem unit 2 to offload some of the computations to an external state predictor running on the application unit 1.

In the set-up of Fig. 1 and Fig. 2, the modem unit 2 comprises a state predictor 50, and the application unit 1 comprises an external state predictor 51. The state predictor 50 on the modem unit 2 is initialised (52) by the main controller 43. The state predictor 50 receives (53) measured data and system parameters. The predictions of the state predictor 50 are derived from measured data and system parameters that indicate the actual state of the system. The state predictor 50 comprises a multitude of different state predictor modules. For example, the state predictor 50 might comprise a state predictor module 54 adapted for predicting one way delay, round trip time (RTT) and throughput, a state predictor module 55 adapted for predicting coding scheme and BER (Bit Error Rate), and a state predictor module 56 adapted for predicting cell reselections. During a cell reselection, data transmission is interrupted for a period of time in the order of seconds, and therefore, the main controller 43 should be informed about cell reselections. The predictions of the state predictor 50 are provided (57) to the main controller 43. Similarly, the external state predictor 51 is initialised (58) by the external main controller 18. The external state predictor 51 receives (59) measured data and system parameters. It comprises state predictor modules 60, 61, 62 adapted for deriving a variety of different predictions. Said predictions are provided (63) to the external main controller 18.

Further, the external main controller 18 initialises (64) an external QoS packet processor 65. The external QoS packet processor 65 is responsible for detecting and keeping track of the various types of data traffic between the transport protocol stacks and the interface facility. For this purpose, it monitors both the uplink traffic and the downlink traffic. The external QoS packet processor 65 detects the bandwidths and the QoS profiles of the different types of data traffic.

On the application unit 1, there might exist applications that are not aware of the QoS management system. For example, the applications e-mail 4 and web-browser 5 shown in Fig. 1 might belong to the group of applications that is not aware of the QoS management system. If one of said applications starts sending data traffic, the external QoS packet processor 65 will detect this new kind of data traffic. Whenever a new type of data traffic is detected, the external QoS packet processor 65 will identify this traffic, the bandwidth and QoS profile of said traffic, and it will identify the application that has generated said traffic. In addition to that, the external QoS packet processor 65 may modify the flow of data packets. For this purpose, the external QoS packet processor 65 may hold back and buffer IP packets of certain data streams, whereby data packets of minor importance may even be discarded. The external QoS packet processor 65 receives control settings 66 from the external main controller 18 that indicate how the filters and buffers have to be set up.

Furthermore, the external main controller 18 initialises (67) an external collector 68 on the application unit 1. The external collector 68 is responsible for collecting information from different entities of the application unit 1. For example, the external collector 68 receives (69) information including the types of traffic, the current bandwidth per traffic type, maximum buffer sizes, current fill levels of various buffers, etc. from the external QoS packet processor 65. Furthermore, the external collector 68 might receive feedback information 70 from the transport protocol stacks, e.g. from the RTP/RTCP protocol stack. The external collector 68 provides (59, 71) the collected information to the external state predictor 51 and to the external main controller 18. Similarly, the modem unit 2 might comprise a collector 72 that is responsible for collecting information from the entities of the modem unit 2.

In addition to the applications that run on the application unit 1, internal applications 9 and the corresponding protocols might as well be installed on the modem unit 2. The internal applications and protocols indicated in Fig. 2 might additionally comprise at least one of: an application manager, a protocol manager, application optimisers and protocol optimisers. Said entities are part of the QoS management system. They are initialised (73) by the main controller 43, and they receive control settings 74 from the main controller 43.

Besides the external QoS processor 65 on the application unit 1, also the modem unit 2 might comprise a QoS packet processor 75 that is initialised (76) by the main controller 43. The QoS packet processor 75 monitors the uplink and downlink traffic. Besides that, it might modify the data traffic passing through it. Data packets may be buffered before they are forwarded to the transmission protocol stack 8, or they may even be discarded.

In particular, the QoS packet processor 75 detects and analyses data traffic arising from the internal applications 9. Information about different types of data traffic and their respective bandwidths is forwarded (77) to the collector 72. The primary main controller, e.g. the main controller 43, processes the information provided by the external QoS packet processor 65 and by the QoS packet processor 75. Based on this information, the primary main controller decides whether the overall QoS can be improved by setting up another PDP context, a PDP subcontext, or a new filter list for the GGSN (Gateway GPRS Support Node). PDP contexts and PDP subcontexts allow to define the transmission properties for a certain type of data traffic. The primary main controller might instruct (78) the mobility/radio resource management 79 to set up or modify a PDP context or a PDP subcontext. The parameters of said PDP contexts and PDP subcontexts are chosen in accordance with the QoS requirements of the respective traffic. When the respective PDP context or PDP subcontext has been activated, the primary main controller will instruct (80) the QoS packet processor 75 to use this PDP context or PDP subcontext for the further transmission of certain types of data traffic.

The transmission protocol stack 8 might e.g. be a GPRS/GSM stack, a GPRS/EDGE stack, a UMTS stack, or a HiperLan stack, or a WLAN stack. In the future, other transmission protocol stacks that relate to future transmission protocols might be employed. In case of a GPRS/GSM or a GPRS/EDGE stack, the stack's uppermost layer is a SNDCP (Sub-Network Dependent Convergence Protocol) layer. In case of a UMTS stack, the uppermost layer is a PDCP (Packet Data Convergence Protocol) layer. The subsequent layer, the LLC (Logical Link Control), is responsible for segmenting the IP packets into data blocks suitable for transmission. For this purpose, the LLC comprises a LLC buffer 81. The data blocks are forwarded to a RLC (Radio Link Control) layer comprising a RLC buffer 82. The data blocks are provided to the physical layer L1, which is the lowest layer of the transmission protocol stack 8. The main controller 43 may initialise (83) a LLC manager 84 that is part of the QoS management system. The LLC manager 84 may set various parameters of the LLC, delete LLC blocks or reorder LLC blocks. Similarly, the main controller 43 may initialise (85) a RLC manager 86 that is adapted for accessing the settings of the RLC, and for modifying the RLC data blocks.

The control settings of the transmission protocol stack 8 may be dynamically adapted (87) by a stack manager 88, which is initialised (89) and controlled (90) by the main controller 43. There exist a variety of possibilities how the stack manager 88 can do that: the stack manager 88 might e.g. influence (91) the mobility/radio resource management 79 in a way that a cell reselection is either initiated or delayed. Furthermore, it might reset the RLC buffer 82 and/or delete selected PDUs (Protocol Data Units) in the RLC buffer 82. Besides that, the stack manager 88 might be involved in administrating PDP contexts and PDP subcontexts. Furthermore, the stack manager 88 might be involved in setting the filter rules of the GGSN in accordance with the QoS requirements of the respective traffic. By setting the RLC mode, the stack manager 88 might specify whether an acknowledged or an unacknowledged mode shall be used for the data transmission, and how the delivery of defective RLC blocks shall be handled.

The mobility/radio resource management 79 is responsible for the mobility management, for authorization, and for establishing and terminating a wireless connection. It is also responsible for performing cell reselections, i.e. for switching from one base station to an adjacent base station. The mobility/radio resource management is instructed to set up PDP contexts and PDP subcontexts with suitable attributes for all kinds of data traffic as well as filter lists for the GGSN.

After the collector 72 on the part of the modem unit 2 has been initialised (92), it starts collecting information from different entities on the modem unit 2. For example, from the physical layer L1, information relating to the signal power and the available bandwidth of the wireless connection might be obtained (93). The collector 72 might further collect information from the RLC (94), from the LLC (95), from the SNDCP/PDCP (96), from the QoS packet processor 75 (77), and from the internal applications 9 (97). The collected data is provided (53, 98) to the state predictor 50 as well as to the main controller 43. Between the application unit's external collector 68 and the modem unit's collector 72, a direct communication might be established, and collected data might be exchanged via the Fast QoSM Connection 42.

During operation, the respective primary controller will receive flow parameters from the application unit's external collector 68, and from the modem unit's collector 72. Furthermore, the respective primary controller is provided with predictions from the state predictor 50 and from the external state predictor 51. The primary controller is responsible for making decisions, and for determining the control settings for the entire system in accordance with predefined strategies. The aim is to smoothly adapt the control settings to the requirements of the various data streams. In case the external main controller 18 is selected as the primary controller, flow parameters and predictions provided by the collector 72 and the state predictor 50 are transmitted via the Fast QoSM connection 42 and the data link 48 to the external main controller 18. Control settings that are destined for the modem unit 2 are transmitted via the data link 48 and the Fast QoSM connection 42 to the entities on the modem unit 2. The main controller 43, which acts as a secondary controller, might be responsible for distributing the control settings on the modem unit 2.

In case the main controller 43 is selected as the primary controller, flow parameters and predictions provided by the external collector 68 and the external state predictor 51 are transmitted via the Fast QoSM connection 42 and the data link 49 to the main controller 43. Control settings for the application unit 1 are transmitted via the data link 49 and the Fast QoSM connection 42 to the entities on the application unit 1. In this case, the external main controller 18 acts as a slave of the main controller 43. Said external main controller 18 might be responsible for distributing the control settings on the application unit 1.

It has to be pointed out that a QoS management system according to the present invention doesn't have to comprise every single one of the modules shown in Fig. 1 and Fig. 2. A QoS management system according to an embodiment of the present invention might as well comprise a subset of the above-mentioned modules.

In the European Patent Application "Quality-of-Service Management System", Application No. 03012613.0, which has been filed by the applicant of the present invention, a detailed description of the QoS management system's entities and their respective functionality can be found. The disclosure of said application is herewith incorporated into this specification by reference.

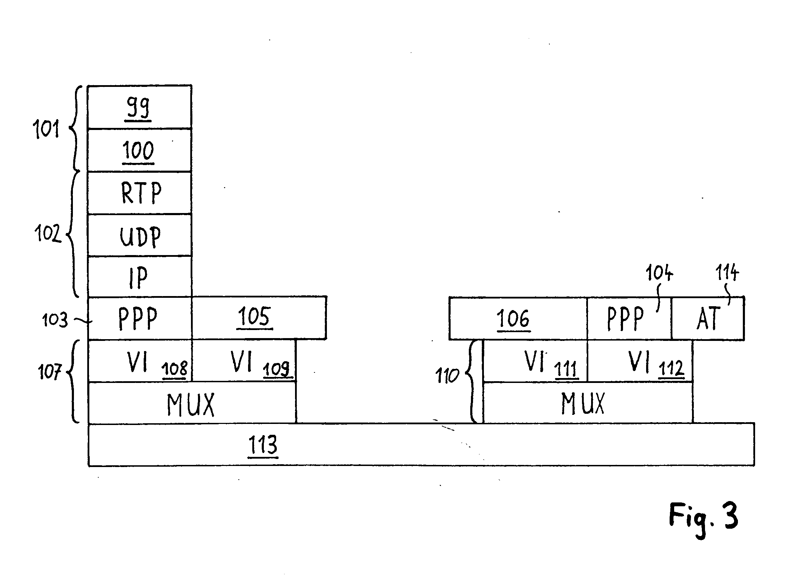

Fig. 3 shows the layers of the transport protocol stack together with the layers of a multiplexing protocol that is used for transmitting data via the physical interface 3. For example, user data 99 that is part of a real-time data traffic might be generated on the application unit 1. A header 100 for payload is added to said user data 99, and the obtained payload 101 is forwarded to a corresponding transport protocol stack 102. In Fig. 3, the transport protocol stack 102 comprises protocol layers for RTP, UDP and IP. The transport protocol stack 102 provides IP packets to the interface facility. For setting up a connection between the application unit 1 and the modem unit 2, protocols of the PPP protocol suite might be employed (103, 104) on both units. Alternatively or additionally, services provided by a Comm Handler 105 on the application unit 1 and by a Comm Handler 106 on the modem unit 2 might be utilized.

In order to allow for the transmission of multiple data streams via the physical interface 3, a multiplexing protocol is implemented on the application unit 1 and on the modem unit 2. For example, a multiplexing protocol according to one of the standards 3GPP 27.010 or 7.010 might be used. On the application unit 1, the multiplexing protocol 107 provides a set of virtual interfaces 108, 109. Accordingly, virtual interfaces 111, 112 are provided by the multiplexing protocol 110 on the modem unit 2. Said virtual interfaces may be used for setting up virtual channels between the application unit 1 and the modem unit 2. Then, IP packets may be transmitted from the application unit 1 to the modem unit 2, and vice versa, via the physical layer 113. In addition to user data, messages and commands might be transmitted via the physical layer 113 between the Comm Handlers 105 and 106. The AT command interpreter 114 is used to set up and modify the virtual interfaces.

## Claims

1. An application unit (1) that comprises at least one application adapted for exchanging data traffic for wireless communication with at least one protocol stack; wherein said at least one protocol stack is adapted for transferring data traffic between at least one of said applications and at least one physical interface (3); **characterized in that**
said at least one physical interface (3) is adapted for transmitting data traffic as well as flow control information between said application unit (1) and a modem unit (2).

2. The application unit of claim 1, **characterized in that** said at least one physical interface (3) is realized as or comprises at least one serial interface, in particular at least one of a RS232, IrDA, Bluetooth, USB, PCMCIA, UART interface.

3. The application unit of claim 1 or any one of the preceding claims, **characterized in that** said flow control information comprises at least one of:
- QoS profiles of said applications;
- actual parameters indicating the actual state of the data flow on at least one of the application unit (1) and the modem unit (2);
- predicted parameters indicating a future state of the data flow on at least one of the application unit (1) and the modem unit (2).

4. The application unit of claim 1 or any one of the preceding claims, **characterized in that** said flow control information comprises control settings adapted for controlling the data flow on at least one of the application unit (1) and the modem unit (2).

5. The application unit of claim 1 or any one of the preceding claims, **characterized in that** said application unit (1) is adapted for receiving, from said modem unit (2), at least one of control settings for said applications, control settings for said protocol stacks, control settings for buffers, wherein said control settings are transmitted as a part of said flow control information.

6. The application unit of claim 1 or any one of the preceding claims, **characterized in that** said application unit (1) is adapted for transmitting to said modem unit (2) at least one of: information about said applications, QoS profiles of said applications, information about the protocols used by said applications, types of data traffic, bandwidth per traffic type, maximum buffer sizes, buffer fill levels, wherein said information is transmitted as a part of said flow control information.

7. The application unit of claim 1 or any one of the preceding claims, **characterized in that** said application unit (1) is adapted for transmitting to said modem unit (2) at least one of: predictions related to cell reselections, predictions related to throughput, predictions related to bit error rate, predictions related to coding scheme, predictions related to one way delay, predictions related to round trip time, wherein said predictions are transmitted as a part of said flow control information.

8. The application unit of claim 1 or any one of the preceding claims, **characterized in that** a set of virtual interfaces (29-36) is used for setting up, maintaining and terminating one or more data connections via said at least one physical interface (3).

9. The application unit of claim 1 or any one of the preceding claims, **characterized by** a permanent high-priority connection (42) that is set up between said application unit (1) and said modem unit (2), with said flow control information being transmitted via said high-priority connection (42).

10. The application unit of claim 1 or any one of the preceding claims, **characterized in that** said at least one physical interface (3) is adapted for transmitting said data traffic and said flow control information in a multiplexed mode between said application unit (1) and said modem unit (2).

11. The application unit of claim 1 or any one of the preceding claims, **characterized in that** said application unit (1) comprises at least two physical interfaces, whereby said flow control information is transmitted via different physical interfaces than said data traffic.

12. The application unit of claim 1 or any one of the preceding claims, **characterized by** a first communication handler module (41) adapted for coordinating and prioritising data traffic between functional entities of the application unit (1) and the modem unit (2).

13. The application unit of claim 1 or any one of the preceding claims, **characterized by** a first controller module (18) adapted for receiving at least one of flow control information collected on the application unit (1) and flow control information received via said at least one physical interface (3), and for deriving, from said inputs, control settings in a way that the overall data flow is optimised.

14. The application unit of claim 13, **characterized in that** said first controller module (18) may act as a primary controller that controls a second controller module (43) on the modem unit (2).

15. The application unit of claim 13, **characterized in that** said first controller module (18) may act as a secondary controller that is controlled by a second controller module (43) on the modem unit (2).

16. The application unit of claim 1 or any one of the preceding claims, **characterized by** at least one protocol optimiser module (21-25) adapted for accessing the settings of corresponding protocol stacks, preferably in accordance with control settings.

17. The application unit of claim 1 or any one of the preceding claims, **characterized by** a first QoS packet processor module (65) adapted for at least one of monitoring and modifying the data traffic between at least one of the protocol stacks and said at least one physical interface (3).

18. A modem unit (2) for mobile communication comprising
- a broadcast facility adapted for setting up a wireless connection for mobile communication;
- at least one transmission protocol stack (8) adapted for transferring data traffic between said broadcast facility and at least one physical interface (3);
- said at least one physical interface (3), which is adapted for transmitting data traffic as well as flow control information between the modem unit (2) and at least one application unit (1).

19. The modem unit of claim 18, **characterized in that** said flow control information comprises at least one of:
- QoS profiles of said applications;
- actual parameters indicating the actual state of the data flow on at least one of the modem unit (2) and one or more of the application units (1);
- predicted parameters indicating a future state of the data flow on at least one of the modem unit (2) and one or more of the application units (1).

20. The modem unit of claim 18 or any one of the preceding claims, **characterized in that** said flow control information comprises at least one of:
- control settings adapted for controlling the data flow on at least one of the modem unit (2) and one or more of the application units (1).

21. The modem unit of claim 18 or any one of the preceding claims, **characterized in that** said modem unit (2) is adapted for transmitting to at least one of the application units (1) at least one of: parameters of the air link, signal strength of the wireless connection, parameters of the transmission protocol stack (8), available bandwidth, maximum buffer sizes, buffer fill levels, information about PDP contexts, radio resource management information, wherein said information is transmitted as a part of said flow control information.

22. The modem unit of claim 18 or any one of the preceding claims, **characterized in that** said modem unit (2) is adapted for receiving, from at least one of the application units (1), at least one of: information about said applications, QoS profiles of said applications, information about the protocols used by said applications, types of data traffic, bandwidth per traffic type, maximum buffer sizes, buffer fill levels, wherein said information is transmitted as a part of said flow control information.

23. The modem unit of claim 18 or any one of the preceding claims, **characterized in that** said modem unit (2) is adapted for receiving, from at least one of the application units (1), at least one of: control settings for the transmission protocol stack (8), control settings for PDP contexts, control settings for buffers, wherein said control settings are transmitted as a part of said flow control information.

24. The modem unit of claim 18 or any one of the preceding claims, **characterized in that** said modem unit (2) is adapted for transmitting to at least one of the application units (1) at least one of: predictions related to cell reselections, predictions related to throughput, predictions related to bit error rate, predictions related to coding scheme, predictions related to one way delay, predictions related to round trip time, wherein said predictions are transmitted as a part of said flow control information.

25. The modem unit of claim 18 or any one of the preceding claims, **characterized by** a second communication handler module (44) adapted for coordinating and prioritising data traffic between functional entities on at least one of the modem unit (2) and one or more of the application units (1).

26. The modem unit of claim 18 or any one of the preceding claims, **characterized by** a second controller module (43) adapted for receiving at least one of flow control information collected on the modem unit (2) and flow control information received via said at least one physical interface, and for deriving, from said inputs, control settings in a way that the overall data flow is optimised.

27. The modem unit of claim 18 or any one of the preceding claims, **characterized in that** the applications' QoS profiles are taken into account by at least one of: setting PDP contexts, setting PDP subcontexts, setting or modifying GGSN filter rules.

28. The modem unit of claim 18 or any one of the preceding claims, **characterized by** a second QoS packet processor module (75) adapted for at least one of monitoring and modifying the data traffic between said at least one physical interface (3) and the transmission protocol stack (8).

29. The modem unit of claim 18 or any one of the preceding claims, **characterized by** a command interpreter (45) adapted for receiving and processing at least one of messages and commands issued by at least one of the application units (1), in particular for receiving and processing initialisation messages.

30. A user equipment comprising at least one application unit (1) according to any of claims 1 to 17 that is connected, via said at least one physical interface (3), with a modem unit (2) according to any of claims 18 to 29, wherein data traffic as well as flow control information is transmitted, via said at least one physical interface (3), between at least one of the application units (1) and said modem unit (2).

31. The user equipment of claim 30, **characterized in that** said modem unit (2) and at least one of the application units (1) are implemented as one embedded mobile device, preferably as a smartphone.

32. The user equipment of claim 30, **characterized in that** said modem unit (2) is implemented as a separate device, preferably as a CF card, as a PCMCIA card, or as a part of a mobile phone, and wherein at least one of the application units (1) is implemented as a separate device, preferably as a laptop, as a mobile terminal, or as a PDA.

33. An interface facility adapted for transmitting data between at least one application unit (1) and a modem unit (2), with at least one application being installed on at least one of the application units (1), and with said modem unit (2) being adapted for establishing a wireless connection for mobile communication,
- said interface facility being adapted for transferring data traffic of said at least one application between said modem unit (2) and at least one of the application units (1); and
- said interface facility comprising a dedicated high-priority connection (42) adapted for transmitting flow control information between said modem unit (2) and at least one of the application units (1).

34. A method for coordinating data flow in a user equipment for mobile communication, said user equipment comprising at least one application unit and a modem unit (2), with at least one application being installed on at least one of the application units (1), said method comprising steps of:
- setting up one or more connections between at least one of the application units (1) and the modem unit (2) via at least one physical interface (3);
- transmitting data traffic of at least one of the applications as well as flow control information via said one or more connections.

35. Computer program product, comprising computer program means adapted to perform the method steps as defined in claim 34 when said computer program product is executed on a mobile device, processing system, digital signal processor, or the like.
